# EUROPEAN PATENT SPECIFICATION

(11) **EP 2 945 430 B1**
(45) Date of publication and mention of the grant of the patent: **09.08.2017**
(21) Application number: 14168587.5
(22) Date of filing: 16.05.2014
(51) Int. Cl.: H04W 24/02

(54) **Coverage enhancement in a wireless communications network**
Abdeckungsverbesserung in einem drahtlosen Kommunikationsnetz
Amélioration de la couverture dans un réseau de communication sans fil

(43) Date of publication of application: 18.11.2015
(73) Proprietor: FUJITSU LIMITED, Kawasaki-shi, Kanagawa 211-8588 (JP)
(72) Inventor: LI, Zhaojun, Guildford, Surrey GU3 2DJ (GB)
(74) Representative: Schultes, Stephan

(56) References cited:
- WO-A1-2007/113457
- LG ELECTRONICS: "Cell Acquisition and Reference Signals for Coverage Limiting MTC UEs", 3GPP DRAFT; R1-130263 (MTC LG), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. St Julian; 20130128 - 20130201 18 January 2013 (2013-01-18), XP050663395, Retrieved from the Internet: URL:http://www.3gpp.org/ftp/tsg_ran/WG1_RL 1/TSGR1_72/Docs [retrieved on 2013-01-18]
- ERICSSON: "Transport Block Size limitation for low cost MTC UEs", 3GPP DRAFT; R2-140673 - TRANSPORT BLOCK SIZE LIMITATION FOR LOW COST MTC UES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS C , vol. RAN WG2, no. Prague, Czech Republic; 20140210 - 20140214 9 February 2014 (2014-02-09), XP050737798, Retrieved from the Internet: URL:http://www.3gpp.org/ftp/Meetings_3GPP_ SYNC/RAN/RAN2/Docs/ [retrieved on 2014-02-09]
- CHINA TELECOM: "Views on Interference Avoidance and Coordination for SCE", 3GPP DRAFT; R1-132203, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Fukuoka, Japan; 20130520 - 20130524 11 May 2013 (2013-05-11), XP050697975, Retrieved from the Internet: URL:http://www.3gpp.org/ftp/tsg_ran/WG1_RL 1/TSGR1_73/Docs/ [retrieved on 2013-05-11]
- SONY: "Enhanced Coverage Issues", 3GPP DRAFT; R2-140369 COVERAGE ENH IDLE MODE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech Republic; 20140210 - 20140214 9 February 2014 (2014-02-09), XP050737581, Retrieved from the Internet: URL:http://www.3gpp.org/ftp/Meetings_3GPP_ SYNC/RAN/RAN2/Docs/ [retrieved on 2014-02-09]
- LG ELECTRONICS INC: "Mobility support for low cost MTC UE", 3GPP DRAFT; R2-134369 MOBILITY SUPPORT FOR LOW COST MTC UE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. San Francisco, U.S.A.; 20131111 - 20131115 13 November 2013 (2013-11-13), XP050737080, Retrieved from the Internet: URL:http://www.3gpp.org/ftp/Meetings_3GPP_ SYNC/RAN/RAN2/Docs/ [retrieved on 2013-11-13]
- CATT: "Discussion on mobility support for Low Complexity MTC UEs and MTC coverage enhancement", 3GPP DRAFT; R2-134040 DISCUSSION ON MOBILITY SUPPORT FOR LOW COMPLEXITY MTC UES AND MTC COVERAGE ENHANCEMENT, 3RD GENERATION PARTNERSHIP PROJECT (3GPP), MOBILE COMPETENCE CENTRE ; 650, ROUTE DES LUCIO , vol. RAN WG2, no. San Francisco, USA; 20131111 - 20131115 13 November 2013 (2013-11-13), XP050736847, Retrieved from the Internet: URL:http://www.3gpp.org/ftp/Meetings_3GPP_ SYNC/RAN/RAN2/Docs/ [retrieved on 2013-11-13]
- INTEL CORPORATION: "Consideration on acquisition of SS and system information for coverage improvement", 3GPP DRAFT; R1-140413 INTEL-PSS_SSS_COVERAGE_MTC_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, Czech Republic; 20140210 - 20140214 9 February 2014 (2014-02-09), XP050735956, Retrieved from the Internet: URL:http://www.3gpp.org/ftp/Meetings_3GPP_ SYNC/RAN/RAN1/Docs/ [retrieved on 2014-02-09]

## Description

### Field

Embodiments described herein relate to providing coverage to a User Equipment (UE), such as a low power UE, in a wireless communication network.

### Backaround

A UE operating in a wireless communication network may experience poor coverage conditions, for example because of high pathloss due to its distance from a base station and/or because of reduced transmission/reception capability of the UE.

To compensate for such and other poor coverage conditions, various coverage enhancement techniques have been proposed in 3GPP TR 36.888 V12.0.0 (2013-06) (available at http://www.3gpp.org/DynaReport/36888.htm). However, coverage enhancement techniques such as these consume resources of the wireless communication network. It would therefore be desirable to be able to employ coverage enhancement techniques efficiently (in terms of radio resource utilisation) to support both idle mode and connected mode UEs.

R1-130263, "Cell acquisition and reference signals for coverage limiting MTC UEs" by LG Electronics for 3GP TSG RAN WG1 #72, 28th January - 1st February 2013 discloses a cell selection and connection procedure, in which a UE in RRC_IDLE mode requires acquiring MIB and SIB 1 to 8, and a UE in RRC_CONNECTED mode requires acquiring MIB, SIB1 and SIB2 for a target cell. Before a UE is able to transmit a PRACH to initiate setup procedure, it should acquire at least MIB, SIB1 and SIB2. Once an eNB receives a RACH from a coverage-limiting UE, it would be able to identify whether the UE requires coverage enhancement or not.

The subject matter claimed herein is not limited to embodiments that solve any disadvantages or that operate only in environments such as those described above. Rather, this Background is provided to illustrate one example technology area where embodiments described herein may be implemented.

### Summary

According to an aspect of the invention, there is provided a method of providing coverage to a User Equipment, UE, in a wireless communications network according to claim 1. Such a 'resource on demand' approach allows the base station to allocate resources (e.g., radio resources such as transmission power and bandwidth) efficiently, that is, to utilize a coverage enhancement technique when required by the UE. Thus, the coverage enhancement technique can be utilized to provide coverage to UEs (such as low power UEs) when weak coverage is observed. This enables dynamic coverage extension application so that better resource utilisation can be achieved.

Herein, "coverage enhancement" refers to any technique designed to improve coverage. As noted above, coverage can be inadequate due to, for example, a reduced reception capability of the UE (i.e., a less complex receiver with a reduced signal detection capability). The term "detecting" or "detection" may encompass the action of receiving and/or decoding. Receiving generally implies determining the existence of a given channel/signal/message or type of channel/signal/message. Decoding generally implies extracting some information conveyed by the channel/signal/message. It may also encompass evaluating the received quality of the downlink acquisition channel to ensure that the received downlink acquisition channel has sufficient quality, typically above a defined threshold value. Thus, the UE may not be able to perform network access in the absence of being able to detect the plurality of different acquisition channels from the base station.

One arrangement which is not an embodiment provides a method of providing coverage to a User Equipment, UE, in a wireless communications network in which a base station transmits a plurality of different acquisition channels, the method comprising: detecting, by the UE when in a connected mode with respect to a serving base station, some of the plurality of different acquisition channels of a neighbouring base station; transmitting, by the UE to the serving base station, a first signal indicating the detection by the UE of some of the plurality of different acquisition channels of the neighbouring base station; transmitting, by the serving base station to the neighbouring base station in response to receiving the first signal, a second signal relating to the detection by the UE of some of the plurality of different acquisition channels of the neighbouring base station; and utilizing, by the neighbouring base station in response to receiving the second signal, a downlink coverage enhancement technique with respect to at least one of the plurality of different acquisition channels.

The techniques described herein are therefore applicable not only to UEs in idle mode, for example where the UEs are involved in initial access for which base stations transmit acquisition channels to assist UEs to select a cell to camp on and obtain necessary system information (and paging signalling, if any), but also to UEs in connected mode. As used herein the term "idle mode" is used to denote the state of mobile devices with no active connections to the network, while the term "connected mode" is used to denote the state of mobile devices with an active connection to the network. For example, the idle mode can be the RRC Idle mode in LTE and the connected mode can be the RRC Connected mode in LTE. It will be appreciated that wireless communication networks (i.e., base stations) may support UEs in idle mode as well as UEs in connected mode. Features of the disclosed embodiments can therefore be combined with one another to form additional embodiments. Furthermore, the second signal transmitted by the serving base station can alternatively be a request to utilize a downlink coverage enhancement technique with respect to at least one of the plurality of different downlink transmissions. The signal transmitted by the UE indicates which of the plurality of different acquisition channels has been detected by the UE. In this manner, further efficiency gains can be realised since the coverage enhancement technique can be utilized with respect to a particular downlink acquisition channel.

The acquisition channels can include an acquisition channel carrying information necessary for synchronization with the base station and/or an acquisition channel carrying information necessary for communication with the base station. Where the wireless communication network is based on the 3GPP Long Term Evolution (LTE) standards for example, the acquisition channels can include the primary and secondary synchronization signals, providing the physical cell identity (PCI) of a cell, and the physical broadcast channel (PBCH), which provides system information such as the DL transmission bandwidth and the number of DL antenna ports. It will be appreciated that comparable channels are often provided in other wireless communication networks, although they may be given different names. Accordingly, at least the signal transmitted by the UE can indicate one of: a first detection level in which the UE has detected an acquisition channel carrying information necessary for synchronization with the base station (e.g., synchronization signals such as PSS/SSS), and a second detection level in which the UE has detected an acquisition channel carrying information necessary for communication with the base station (e.g., a system information signal such as PBCH). Furthermore, the information necessary for communication with the base station can comprise one of a plurality of information blocks (e.g., a Master Information Block of system information that also includes System Information Blocks), and the downlink coverage enhancement technique utilized by the base stations can comprise repetition of at least one information block (e.g., repetition of the PBCH and/or repetition of some SIBs). In addition to, or instead of, repetition of some SIBs, the downlink coverage enhancement technique utilized by the base station can include transmission of at least one SIB provided specifically for coverage extension.

In one embodiment, the downlink coverage enhancement technique comprises repetition of the at least one of the plurality of different acquisition channels. Repetition can be a retransmission of an initial transmission or a retransmission of a different version of an initial transmission. For example, additional parity bits can be combined with the initial transmission for improved decoding at the UE. Where the wireless communication network is based on the 3GPP Long Term Evolution (LTE) standards for example, the repetition can include repeating the same or different redundancy version multiple times.

In one arrangement which is not an embodiment, the downlink coverage enhancement technique comprises transmitting measurement configuration information for enabling the UE to perform measurements on the at least one of the plurality of different acquisition channels. This allows the mobile device to detect the downlink acquisition channel(s) in order to successfully perform neighbour cell measurements (e.g., radio resource management, RRM, measurements).

The second signal transmitted by the serving base station can simply provide information to the neighbouring base station, e.g., provide an indication that the UE has detected some of the plurality of different acquisition channels of the neighbouring base station (including an indication of which acquisition channel(s) has (have) been detected by the UE), or can be a request to utilize a downlink coverage enhancement technique to provide coverage to the UE. Such a request can be made with respect to a specific acquisition channel such as, for example, with respect to the acquisition channel(s) that has (have) not been detected by the UE. Accordingly, the decision to utilize a downlink coverage enhancement technique can be taken (requested) by the neighbouring base station (the serving base station).

In one arrangement which is not an embodiment, the neighbouring base station transmits to the serving base station information indicating a capability of the neighbouring base station to utilize a downlink coverage enhancement technique to provide coverage to UEs, and the serving base station transmits the second signal to the neighbouring base station when the neighbouring base station has the capability to utilize a downlink coverage enhancement technique. In this manner, the UE can be handed over to the neighbouring base station only if it is expected that adequate coverage can be provided to the UE by the neighbouring base station. It will be appreciated that the neighbouring base station can transmit the information about its capability to utilize a downlink coverage enhancement technique in advance (i.e., the serving base station can know of the capability of the neighbouring base station in advance).

One arrangement which is not an embodiment provides a method of sharing information between base stations of a wireless communications network, comprising: transmitting, by a first base station to a second base station, information indicating a capability of the first base station to utilize a downlink coverage enhancement technique to provide coverage to user equipments, UEs. Such information can be transmitted as part of a configuration update procedure. The first and second base stations can be neighbouring base stations.

In another arrangement which is not an embodiment, the method further comprises: determining, by the second base station, whether to hand over a low power UE that is being served by the second base station to the first base station based on the capability of the first base station to utilize a downlink coverage enhancement technique to provide coverage to UEs.

According to another aspect of the invention, there is provided a method of requesting coverage by a User Equipment, UE, according to claim 4. According to another aspect of the invention, there is provided a method of providing coverage to a User Equipment, UE, by a base station according to claim 5. According to another aspect of the invention, there is provided a User Equipment, UE, according to claim 6. According to another aspect of the invention, there is provided a base station, according to claim 7. One embodiment provides a wireless communications system, comprising: a user equipment according to the aforementioned embodiment; and a base station according to the aforementioned embodiment.

The UE can be a low power UE, such as a low power Machine-Type Communications (MTC) UE. Typically, the majority of MTC traffic is delay tolerant and low throughput, and the majority of MTC can be developed at lowest cost. In some cases, MTC UEs also require extra low power consumption because it is almost impossible to replace the battery or recharge the battery. For such MTC UEs, a target coverage improvement of up to 20dB is desirable, also due to the use cases where MTC UEs are deployed deep inside buildings.

One embodiment provides a computer-readable medium carrying computer-readable instructions which, when executed by a computer, cause the computer to perform the aforementioned method of providing coverage to a User Equipment, UE, by a base station.

It is to be understood that both the foregoing general description and the following detailed description are exemplary and explanatory and are not restrictive of the invention as claimed.

### Brief Description of the Drawings

These and/or other aspects and advantages will become apparent and more readily appreciated from the following description of the embodiments, taken in conjunction with the accompanying drawings of which:
Figure 1 is a flow chart of an initial access procedure for initial access to a wireless communication network;
Figure 2 is a table summarising coverage enhancement techniques applicable to physical downlink signals and channels;
Figure 3 is a flow chart of a method of providing coverage to a UE when in an idle mode, according to an embodiment;
Figure 4 is a flow chart of a method of providing coverage to a UE when in a connected mode;
Figure 5 is a sequence diagram of a process of information sharing among base stations;
Figure 6 is a functional block diagram of a base station according to an embodiment; and
Figure 7 is a functional block diagram of a UE according to an embodiment.

### Description of Embodiments

Reference will now be made in detail to the embodiments, examples of which are illustrated in the accompanying drawings, wherein like reference numerals refer to the like elements throughout. The embodiments are described below to explain the present invention by referring to the figures.

The embodiments described below are described in the context of LTE by way of example, where the wireless communication system (also referred to as the "wireless communication network") operates using FDD and comprises one or more base stations (also referred to as "eNodeBs" or "eNBs"), each comprising a number of physical antennas and controlling one or more downlink (DL) cells, each DL cell having a corresponding uplink (UL) cell. Each DL cell may serve one or more subscriber stations (also referred to as "UEs") which may receive and decode signals transmitted in that serving cell. It is assumed that one or more eNBs are capable of providing coverage extension for lower power devices. The following explanations specifically refer to MTC in LTE Release 12 as this provides a convenient application for implementing embodiments. However, embodiments of the invention are not limited to LTE FDD. For example, embodiments of the invention can be used in LTE TDD as well as to other communications systems such as UMTS.

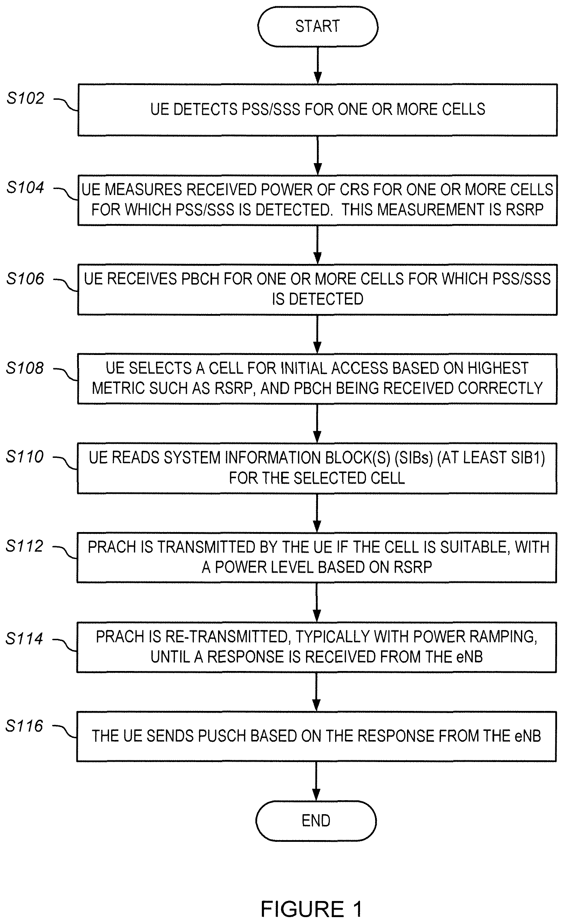

Referring to Figure 1, in LTE initial access to a cell is typically based on the following procedure (described from a physical layer viewpoint, and where some details may be up to implementation):
- Step S102: The UE detects the Primary Synchronization Signal/Secondary Synchronization Signal (PSS/SSS) for one or more cells served by respective base stations (referred to as evolved Node Bs or eNBs for short).
- Step S104: The UE measures received power of Common Reference Signal (CRS) for cells for one or more cells for which PSS/SSS is detected. The LTE-specific metric that averages the RF power in all of the reference signals over an entire bandwidth is called the Reference Signal Received Power (RSRP).
- Step S106: The UE receives the Physical Broadcast Channel (PBCH) for one or more of the cells for which PSS/SSS is detected.
- Step S108: The UE selects a cell for initial access based on highest metric such as RSRP, and on PBCH being received correctly.
- Step S110: The UE reads System Information Block(s) (SIBs) (at least SIB1) for the selected cell.
- Step S112: If the cell is suitable, Physical Random Access Channel (PRACH) is transmitted by the UE, with a power level based on RSRP.
- Step S114: The PRACH may be re-transmitted, typically with power ramping, until a response is received from the eNB.
- Step S116: Based on the response from the eNB, the UE sends Physical Uplink Shared Channel (PUSCH).

Both primary and secondary synchronization signals are designed to be detected by all types of UE. UEs use the PSS for timing and frequency acquisition during cell search. The PSS carries part of the cell ID and provides slot timing (0.5ms) synchronization. It is transmitted on 62 of the reserved 72 subcarriers (6 Resource Blocks) around DC on symbol 6 in slot 0 and 10. UEs use the SSS in cell search. It provides frame timing (10 ms) synchronization and the remainder of the cell ID. It is transmitted on 62 of the reserved 72 subcarriers (6 Resource Blocks) around DC on symbol 5 in slot 0 and 10.

The PBCH is the physical channel that carries a limited number of parameters required for initial access of the cell such as downlink system bandwidth, the Physical Hybrid ARQ Indicator Channel structure, and the most significant eight-bits of the System Frame Number. These parameters are carried in a Master Information Block (MIB) which is 14 bits long. The PBCH is designed to be detectable without prior knowledge of system bandwidth and to be accessible at the cell edge. The MIB is coded at a very low coding rate and mapped to the 72 center sub-carriers (6 RBs) of the OFDM structure. PBCH transmission is spread over four 10 ms frames (over subframe #0) to span a 40 ms period. Each subframe is self decodable, but in case of poor signal quality the UE can 'soft-combine' multiple transmissions until the PBCH is decoded.

The PRACH carries the random access preamble a UE sends to access the network in non-synchronized mode and used to allow the UE to synchronize timing with the eNodeB. It consists of 72 sub-carriers in the frequency domain (six Resource Block, 1.08 MHz). FDD LTE defines four different Random Access (RA) preamble formats with different preamble and cyclic prefix duration to accommodate different cell sizes.

The PUSCH carries user data. It supports QPSK and 16 QAM modulation with 64QAM being optional. Information bits are first channel-coded with a turbo code of mother rate of 1/3 before being adapted by a rate matching process for a final suitable code rate. Adjacent data symbols are mapped to adjacent SC-FDMA symbols in the time domain before being mapped across sub-carriers. After this interleaving process, bits are scrambled before modulation mapping, DFT-spreading, sub-carrier mapping and OFDM modulation. Channel coding is similar to that of the downlink. The uplink scheduling interval is 1 ms, similar to the downlink. However, it is possible to 'bundle' a group of 4 TTIs to improve performance at cell edge and reduce higher layer protocol overhead. In this case, a MAC PDU is segmented for transmission over multiple TTIs. In the frequency domain, transmissions are allocated based on multiples of 180 kHz resource blocks. Uplink resources corresponding to the same set of sub-carriers are assigned for the two slots of a subframe. However, inter-slot frequency hopping is an option whereby different sub-carriers are used for the second slot resulting in a frequency diversity gain and averages interference provided different hopping sequences are used in neighboring cells. The PUSCH carries in addition to user data any control information necessary to decode the information such as transport format indicators and MIMO parameters. Control data is multiplexed with information data prior to DFT spreading.

Mechanisms envisaged in 3GPP TR 36.888 V12.0.0 (2013-06) to provide improved coverage include applying repetition (or additional repetition), in time domain and/or frequency domain, to existing physical channels. For example, referring to Figure 1, repetition can include:
- PSD boosting, relaxed requirement or design of new channels/signals of the PSS/SSS, which may be detected at step S102.
- Repetition of the PBCH, which may be detected at step S106.
- Repetition of some SIBs (and/or provision of one or more new SIBs specifically for coverage extension)
- Repetition of the PRACH signal transmitted at step S112.
- Repetition of PDCCH/EPDCCH, PDSCH, PUSCH at steps S114 and S116.

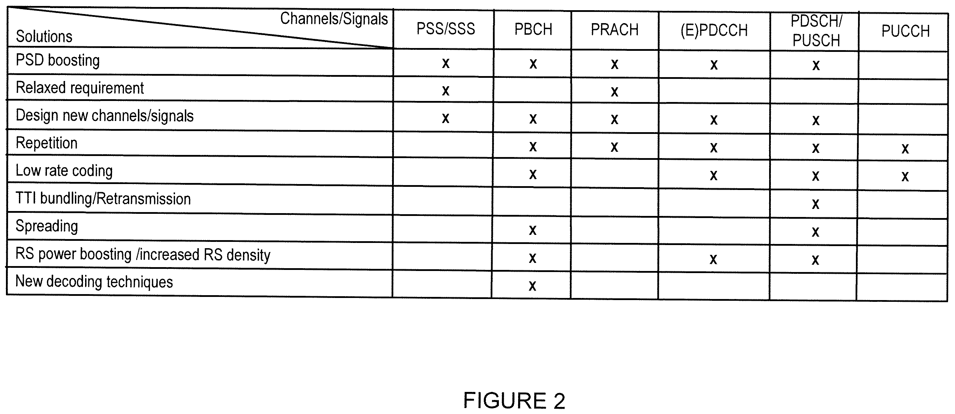

A summary of the coverage improvement mechanisms envisaged in 3GPP TR 36.888 V12.0.0 is provided in the table shown in Figure 2. The reader is referred to 3GPP TR 36.888 V12.0.0 (2013-06) for further details.

Repetition can be applied by repeating the same or different redundancy version multiple times. LTE utilizes an error control scheme referred to as Hybrid Automatic Repeat Request (HARQ). The HARQ scheme combines Automatic Repeat Request (ARQ) protocols with forward-error-correction (FEC) schemes, to provide an error-control technique for wireless links. A receiver of an FEC encoded data packet may attempt to decode the packet. Decoding of the packet may fail based on a Cyclic Redundancy Check (CRC) of the decoded packet. In response to a decoding failure, a request for a retransmission of the packet may be implemented by the receiver. In this regard, the entire original packet may be retransmitted, a portion of the packet may be transmitted, or information associated with the packet may be transmitted to the receiver for error correction purposes. Regardless of the content type of information transmitted, the retransmission may be referred to as a redundancy version of the packet. Depending on the type of redundancy version received by the receiver, the receiver may react accordingly to perform error correction using the redundancy version.

Currently in LTE, the eNB to which a UE is currently connected to configures the UE measurement procedures according to the area restriction information. When moving away from the serving cell, the UE is triggered to send the measurement report. Based on these reports the source eNB makes decision to hand over the UE to another cell.

It is important to guarantee the service continuity of a UE while it is handed over from a source cell to a target cell due to the UE's movement across cell borders or the changes of the network condition (e.g. the quality of the radio channel used by the UE deteriorates). Based on current 3GPP specifications, upon the receipt of the measurement reports, the Source eNB makes the handover decision and initiates handover preparation procedure by sending HO Request message to the candidate Target eNB who control the target cell indicated in the message. The Target eNB replies to the Source eNB with a list of admitted E-RABs based on the admission control on the target cell.

Coverage extension techniques, such as repetition of signals (e.g. PSS/SSS, PBCH, some SIBs, PRACH or PDCCH/EPDCCH, PDSCH, PUSCH), consume more radio resources. It would therefore be desirable to efficiently support both idle mode and connected mode UEs (such as low power UEs) in terms of resource utilisation. Embodiments provide dynamic resource management mechanisms to support UEs such as low power UEs. Idle mode UEs may transmit "beacon" like signals in the UL so that a base station in the vicinity can apply coverage extension techniques to support such UEs. For connected mode UEs, the serving base station may inform neighbour base stations of such UEs in the vicinity and neighbour base stations may apply coverage extension technique so that such UEs can perform neighbour measurements.

### Idle mode UE

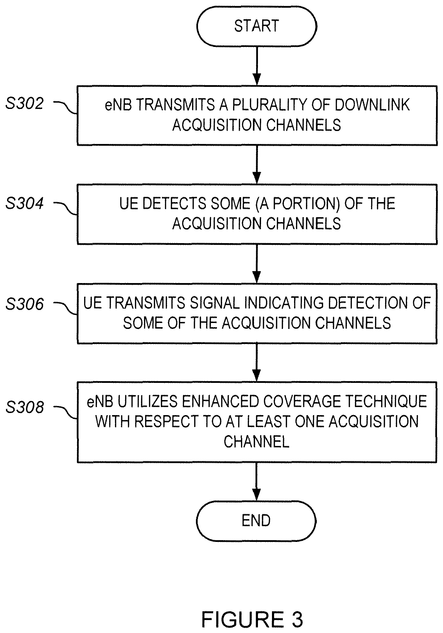

With reference to Figure 3, in the context of LTE, an idle mode UE may consider itself to be "out of coverage" when it moves to an area and is not able to detect all of the acquisition channels (e.g., PSS/SSS, PBCH) transmitted by an eNB (steps S302 and S304). Consequently, the UE transmits a beacon-like signal in the UL to indicate that it can detect some (a portion) of the acquisition channels (step S306).

The signal can be transmitted based on configuration information stored at the UE. Such configuration information can be from default settings or configuration information obtained from the network the last time the UE was connected to the network. For example, the beacon could be transmitted over PRACH and a specific preamble is configured for this usage.

The signal can be used by a UE to indicate, for example, that the PSS/SSS can be detected ("Level 1" detection) or that the PBCH can be detected ("Level 2" detection). Upon receiving the signal, the eNB can apply different coverage enhancement techniques to provide coverage for the UE.

For example, where an idle mode UE indicates to the network that it can only detect PSS/SSS of the cell ("Level 1" detection), the eNB controlling the cell can then apply either or both of the following techniques: repetition of the PBCH which may be detected at step S106 of Figure 1, and repetition of some SIBs (and/or provision of one or more new SIBs specifically for coverage extension). On the other hand, where an idle mode UE indicates to the network that it can detect PBCH of the cell ("Level 2" detection), the eNB controlling the cell can then, for example, apply repetition of some SIBs (and/or provision of one or more new SIBs specifically for coverage extension). In both cases, the idle mode UE can obtain better coverage in terms of obtaining system information of the cell.

### Connected mode UE

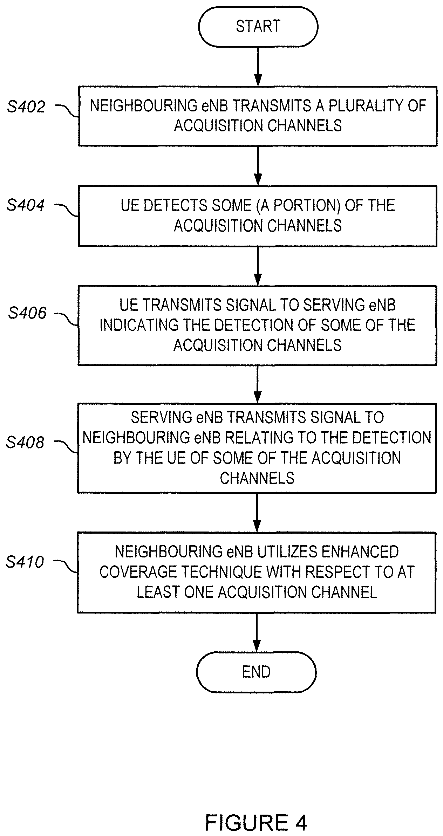

With reference now to Figure 4, a connected mode UE located in a cell edge of a serving eNB detects some of the physical downlink signals channels (e.g., PSS/SSS, PBCH) transmitted by a neighbouring eNB (steps S402 and S404). Consequently, the UE transmits a signal to the serving eNB (step S406) indicating the detection of some of the acquisition channels. The serving eNB (with or without having received information from the neighbouring eNB about its capability of utilizing coverage extension techniques) then informs the neighbouring eNBs accordingly (S408), and a coverage extension technique is then utilized by the neighbouring eNB (step S410).

For example, the UE may report to the serving eNB that it can receive some of the acquisition channels of the neighbouring eNB, but not sufficient to perform neighbour cell measurements. As in the case of idle mode, the signal can be used by a UE to indicate, for example, that the PSS/SSS can be detected ("Level 1" detection) or that the PBCH can be detected ("Level 2" detection). Upon receiving the signal, the serving eNB can inform the neighbouring eNB of the detection by the UE of some of the acquisition channels and, optionally, which acquisition channels the UE can detect. Upon receiving the signal, the neighbouring eNB can apply different coverage extensions techniques to enhance the coverage for the UE.

For example, where the connected mode UE indicates to the serving eNB that it can only detect PSS/SSS of the neighbouring eNB ("Level 1"), the neighbouring eNB can apply either or both of the following techniques: repetition of the PBCH which may be detected at step S106 of Figure 1, repetition of some SIBs (and/or provision of one or more new SIBs specifically for coverage extension). Where a connected mode UE indicates to the serving eNB that it can detect PBCH of the neighbouring eNB, the neighbouring eNB can apply repetition of some SIBs (and/or provision of one or more new SIBs specifically for coverage extension). In both cases, the connected mode UE can obtain better coverage in terms of obtaining system information of the neighbour cell. It will be understood that the decision to apply a coverage extension technique can be taken by the serving eNB or the neighbouring eNB. That is, the serving node eNB can request the neighbour eNB controlling the neighbour cell to apply coverage extension instead of step S408, for example based on information received from the neighbouring eNB about its capability of utilizing coverage extension techniques.

In addition, the neighbouring eNB may respond, for example, with configuration information enabling the UE to perform a neighbour cell measurement (i.e., the UE may need to receive the PSS/SSS for frequency or time acquisition, which is required for the neighbouring cell measurements). By way of example, such configuration information can be the measurement configuration information to instruct the UE how to perform neighbour cell RRM measurements.

### eNB configuration update

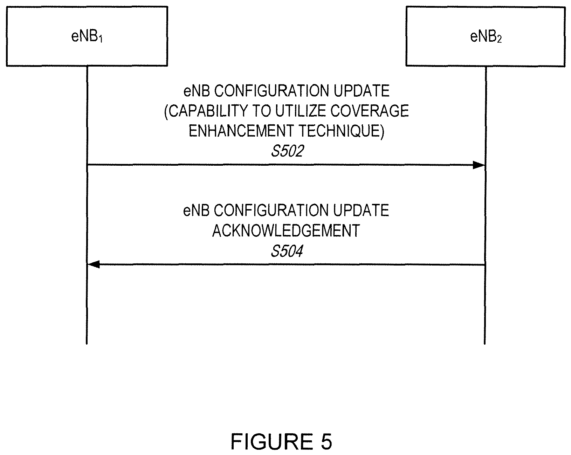

Two or more eNBs in a wireless communication network can share information with each other about their respective capability of utilizing a downlink coverage enhancement technique to provide coverage to UEs. For example, and with reference to Figure 5, an eNB can transmit to eNB information indicating its capability to utilize a downlink coverage enhancement technique to support UEs (S502). The other eNB can transmit an acknowledgement in response (S504), and such an exchange can take place via a modified eNB Configuration Update procedure based on the existing procedure defined in TS36.423. Such information sharing is applicable to, for example, neighbouring eNBs, where a serving eNB can decide if it can hand over a (low power) UE to a neighbour eNB for mobility reasons or load balancing reasons.

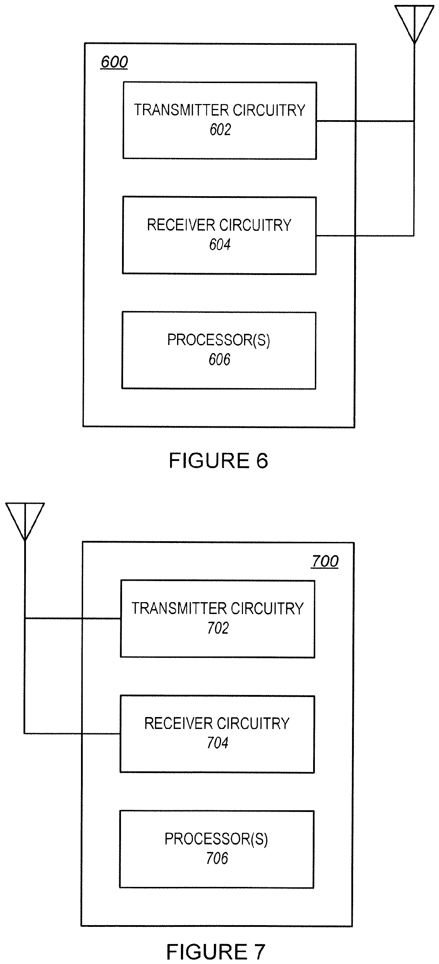

Figures 6 and 7 are block diagrams respectively of the base station 600 and one of the UEs 700, showing only elements which are relevant to the description of the invention. The base station 600 includes transmission circuitry 602 and receiver circuitry 604, under control of one or more processors 606, and the UE 700 includes receiver circuitry 702 and transmission circuitry 704 under control of, one or more processors 706. The circuitry and processors shown in Figures 6 and 7 are configured to undertake the actions described herein. As used in this application, the term "circuitry" can include any of the following: (a) hardware-only circuit implementations (such as implementations in only analog and/or digital circuitry); (b) combinations of circuits and software (and/or firmware), such as (as applicable): (i) a combination of processor(s) or (ii) portions of processor(s)/software (including digital signal processor(s)), software, and memory(ies) that work together to cause an apparatus, such as a mobile phone or server, to perform various functions); and (c) circuits, such as a microprocessor(s) or a portion of a microprocessor(s), that require software or firmware for operation, even if the software or firmware is not physically present. As a further example, the term "circuitry" can also cover an implementation of merely a processor (or multiple processors) or portion of a processor and its (or their) accompanying software and/or firmware. The term "circuitry" can also cover, for example and if applicable, a baseband integrated circuit or application specific integrated circuit for a mobile phone or a similar integrated circuit in server, a cellular network device, or other network device.

In summary then, embodiments provide dynamic resource management mechanisms in which coverage extension is made available (or fully functional) only when there is such demand from UEs (in both idle mode and connected mode), e.g. low power MTC UEs. Idle mode UEs transmit "beacon" like signals so that the network is made aware of such UEs in the vicinity. For connected mode UEs, neighbour eNBs are made aware of such UEs in the vicinity via information exchange among them. One advantage of this approach is that coverage extension is applied in the manner of "resource on demand" so that efficient resource utilisation can be achieved. Another advantage of this approach is that UEs, such as low power MTC UEs, can be better served in both idle mode and connected mode. Although the proposed scheme finds particular application for MTC in LTE, it is not limited to such application.

Although particular embodiments have been described in detail, there are numerous other possible embodiments. Possible variations include, for example, using other coverage enhancement techniques such as, for example, increasing the power by the base station of the downlink transmission (power boosting), concentrating a given level of power into a reduced bandwidth by the base station (Power Spectral Density boosting), TTI bundling, HARQ retransmission, code spreading, RLC segmentation, low rate coding, and low modulation order. These examples should not be considered as exhaustive.

Furthermore, although embodiments have been described in which the UE is a low power MTC UE having limited capability, the techniques described herein can also be used in the case where weak coverage may be observed. One such example can be the so-called "basement scenario" where typically weak mobile signal may be observed and coverage enhancement techniques may be required in order to provide adequate coverage to UEs (including both normal user devices and low power devices).

The various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. The described functionality may be implemented in varying ways without departing from the scope of the exemplary embodiments of the invention.

The various illustrative logical blocks, modules, and circuits described in connection with the embodiments disclosed herein may be implemented or performed with a general purpose processor, a Digital Signal Processor (DSP), an Application Specific Integrated Circuit (ASIC), a Field Programmable Gate Array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in Random Access Memory (RAM), flash memory, Read Only Memory (ROM), Electrically Programmable ROM (EPROM), Electrically Erasable Programmable ROM (EEPROM), registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In one or more exemplary embodiments, the functions described may be implemented in hardware, software, firmware, or any combination thereof. If implemented in software, the functions may be stored on or transmitted over as one or more instructions or code on a computer-readable medium. Computer-readable media includes both a computer-readable storage medium and a computer-readable transmission medium. A "computer-readable storage medium" refers to a non-transitory, physical or tangible storage medium (by way of example, and not limitation, RAM, ROM, EEPROM, CD-ROM or other optical disk storage, magnetic disk storage or other magnetic storage devices, or any other medium that can be used to carry or store desired program code in the form of instructions or data structures and that can be accessed by a computer), and may be differentiated from a "computer-readable transmission medium", which refers to any communication medium that facilitates transfer of a computer program from one place to another (e.g., signal transmitted over wired and/or wireless connection). For example, software can be transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Furthermore, the computer-readable storage medium can also be distributed over network coupled computer systems so that the computer-executable instructions are stored and executed in a distributed fashion. Combinations of the above should also be included within the scope of computer-readable media.

Although embodiments of the present invention have been described in detail, it should be understood that the various changes, substitutions, and alterations could be made hereto without departing from the scope of the invention, as defined in the claims.

## Claims

1. A method of providing coverage to a User Equipment, UE (700), in a wireless communications network that includes a base station (600), the method comprising:
transmitting (S302), by the base station (600), a plurality of different acquisition channels;
detecting (S304), by the UE (700) when in an idle mode, some of the plurality of different acquisition channels of the base station (600);
transmitting (S306), by the UE (700) to the base station (600), a signal indicating the detection by the UE (700) of some of the plurality of different acquisition channels of the base station (600); and
utilizing (S308), by the base station (600) in response to receiving the signal, a downlink coverage enhancement technique with respect to at least one of the plurality of different acquisition channels, **characterised in that** the signal indicates which of the plurality of different acquisition channels has been detected by the UE (700).

2. The method of claim 1, wherein the signal transmitted by the UE (700) indicates one of: a first detection level in which the UE (700) has detected an acquisition channel carrying information necessary for synchronization with the base station (600), and a second detection level in which the UE (700) has detected an acquisition channel carrying information necessary for communication with the base station (600).

3. The method of claim 2, wherein the information necessary for communication with the base station (600) comprises one of a plurality of information blocks, and the downlink coverage enhancement technique utilized by the base stations (600) comprises repetition of at least one information block.

4. A method of requesting coverage by a User Equipment, UE (700), the method comprising:
when the UE (700) is in an idle mode, determining that some of a plurality of different acquisition channels transmitted by a base station (600) have been detected by the UE (700), transmitting a signal to the base station (600) indicating the detection by the UE (700) of some of the plurality of different acquisition channels of the base station (600), **characterised in that** the signal indicates which of the plurality of different acquisition channels has been detected by the UE (700).

5. A method of providing coverage to a User Equipment, UE (700), by a base station (600) configured to transmit a plurality of different acquisition channels, the method comprising:
transmitting the plurality of different acquisition channels;
receiving a signal indicating detection by the UE (700) of some of the plurality of different downlink acquisition channels; and
utilizing a downlink coverage enhancement technique with respect to at least one of the plurality of different acquisition channels, **characterised in that** the signal indicates which of the plurality of different acquisition channels has been detected by the UE (700).

6. A User Equipment, UE (700), comprising:
a transmitter (702);
a receiver (704); and
a processor (706), wherein the processor (706) is configured to:
when the UE (700) is in an idle mode, determine that some of a plurality of different acquisition channels transmitted by a base station (600) have been detected by the receiver (704), and the processor (706) is configured to instruct the transmitter (702) to transmit to the base station (600) a signal indicating the detection of some of the plurality of different acquisition channels, **characterised in that** the signal indicates which of the plurality of different acquisition channels has been detected by the UE (700).

7. A base station (600), comprising
a transmitter (602);
a receiver (604); and
a processor (606), wherein the processor (606) is configured to:
instruct the transmitter (602) to transmit a plurality of different acquisition channels, and the processor (606) is configured to
process a signal received by the receiver (604) indicating detection by a User Equipment, UE (700), of some of the plurality of different acquisition channels, and
instruct the transmitter (602) to utilize a downlink coverage enhancement technique with respect to at least one of the plurality of different acquisition channels, **characterised in that** the signal indicates which of the plurality of different acquisition channels has been detected by the UE (700).

8. A wireless communications system, comprising:
a User Equipment, UE (700), according to claim 6; and
a base station (600) according to claim 7.

9. A computer-readable medium carrying computer-readable instructions which, when executed by a computer, cause the computer to perform the method of claim 5.

## Patentansprüche

1. Verfahren zum Bereitstellen der Erfassung einer Nutzeranlage, UE (700), in einem drahtlosen Kommunikationsnetz, das eine Basisstation (600) enthält, wobei das Verfahren Folgendes umfasst:
Übertragen (S302) mehrerer verschiedener Erfassungskanäle durch die Basisstation (600);
Feststellen (S304) durch die UE (700), in einem Leerlaufmodus, einiger der mehreren verschiedenen Erfassungskanäle der Basisstation (600);
Übertragen (S306), durch die UE (700) an die Basisstation (600), eines Signals, das die Feststellung von einigen der mehreren verschiedenen Erfassungskanäle der Basisstation (600) durch die UE (700) anzeigt; und
Nutzen (S308), durch die Basisstation (600) als Reaktion auf den Empfang des Signals, eines Abwärtsstreckenempfangs-Verstärkungsverfahrens in Bezug auf mindestens einen der mehreren verschiedenen Erfassungskanäle, **dadurch gekennzeichnet, dass** das Signal anzeigt, welcher der mehreren verschiedenen Erfassungskanäle von der UE (700) festgestellt worden ist.

2. Verfahren nach Anspruch 1, wobei das Signal, das durch die UE (700) übertragen wurde, eines der folgenden anzeigt: einen ersten Feststellungspegel, bei dem die UE (700) einen Erfassungskanal festgestellt hat, der Informationen trägt, die notwendig für die Synchronisierung mit der Basisstation (600) sind, und einen zweiten Feststellungspegel, bei dem die UE (700) einen Erfassungskanal festgestellt hat, der Informationen trägt, die für die Kommunikation mit der Basisstation (600) notwendig sind.

3. Verfahren nach Anspruch 2, wobei die Informationen, die notwendig für die Kommunikation mit der Basisstation (600) sind, einen von mehreren Informationsblöcken umfasst, und das Abwärtsstreckenempfangs-Verstärkungsverfahren, das von der Basisstation (600) genutzt wird, umfasst die Wiederholung von mindestens einem Informationsblock.

4. Verfahren zum Anfordern von Abdeckung durch eine Nutzerausrüstung, UE (700), wobei das Verfahren Folgendes umfasst:
Wenn die UE (700) sich in einem Leerlaufmodus befindet, Bestimmen, dass einige der mehreren verschiedenen Erfassungskanäle, die durch eine Basisstation (600) übertragen werden, von der UE (700) festgestellt worden sind, Übertragen eines Signals an die Basisstation (600), das die Feststellung von einigen der mehreren verschiedenen Erfassungskanäle der Basisstation (600) durch die UE (700) anzeigt, **dadurch gekennzeichnet, dass** das Signal anzeigt, welcher der mehreren verschiedenen Erfassungskanäle durch die UE (700) festgestellt worden ist.

5. Verfahren zum Bereitstellen von Erfassung für eine Nutzerausrüstung, UE (700), durch eine Basisstation (600), die dafür ausgelegt ist, mehrere verschiedene Erfassungskanäle zu übertragen, wobei das Verfahren umfasst:
Übertragen der mehreren verschiedenen Erfassungskanäle;
Empfangen eines Signals, das die Feststellung von einigen der mehreren verschiedenen Abwärtsstrecken-Erfassungskanälen durch die UE (700) anzeigt; und Nutzen eines Abwärtsstreckenempfangs-Verstärkungsverfahrens in Bezug auf mindestens einen der mehreren verschiedenen Erfassungskanäle, **dadurch gekennzeichnet, dass** das Signal anzeigt, welcher der mehreren verschiedenen Erfassungskanäle von der UE (700) festgestellt worden ist.

6. Nutzerausrüstung, (UE) (700), umfassend:
einen Sender (702);
einen Empfänger (704); und
einen Prozessor (706), wobei der Prozessor (706) für Folgendes ausgelegt ist:
Wenn die UE (700) sich in einem Leerlaufmodus befindet, Bestimmen, dass einige der mehreren verschiedenen Erfassungskanäle, die durch eine Basisstation (600) übertragen werden, vom Empfänger (704) festgestellt worden sind, und der Prozessor (706) ist dafür ausgelegt, den Transmitter (702) anzuweisen, an die Basisstation (600) ein Signal zu senden, das die Feststellung von einigen der mehreren verschiedenen Erfassungskanäle anzeigt, **dadurch gekennzeichnet, dass** das Signal anzeigt, welcher der mehreren verschiedenen Erfassungskanäle durch die UE (700) festgestellt worden ist.

7. Basisstation (600), umfassend:
einen Sender (602);
einen Empfänger (604); und
einen Prozessor (606), wobei der Prozessor (606) für Folgendes ausgelegt ist:
den Sender (602) anzuweisen, mehrere verschiedene Erfassungskanäle zu übertragen, und der Prozessor (606) ist dafür ausgelegt, ein Signal zu verarbeiten, das vom Empfänger (604) empfangen wird, welches die Feststellung von einigen der mehreren verschiedenen Erfassungskanäle durch eine Nutzerausrüstung, UE (700), anzeigt, und den Sender (602) anzuweisen, ein Abwärtsstreckenempfangs-Verstärkungsverfahren in Bezug auf mindestens einen der mehreren verschiedenen Erfassungskanäle zu nutzen, **dadurch gekennzeichnet, dass** das Signal anzeigt, welcher der mehreren verschiedenen Erfassungskanäle von der UE (700) festgestellt worden ist.

8. Drahtloses Kommunikationssystem, umfassend:
eine Nutzerausrüstung, UE (700), nach Anspruch 6; und
eine Basisstation (600) nach Anspruch 7.

9. Computerlesbares Medium, das computerlesbare Anweisungen enthält, die bei Ausführung durch einen Computer bewirken, dass der Computer das Verfahren nach Anspruch 5 ausführt.

## Revendications

1. Procédé de fourniture d'une couverture à un équipement utilisateur, UE (700), dans un réseau de communication sans fil qui comprend une station de base (600), le procédé comprenant les étapes consistant à :
transmettre (S302), par la station de base (600), une pluralité de canaux d'acquisition différents ;
détecter (S304), par l'UE (700) lorsqu'il est en mode veille, une partie de la pluralité de canaux d'acquisition différents de la station de base (600) ;
transmettre (S306), par l'UE (700) à la station de base (600), un signal indiquant la détection par l'UE (700) d'une partie de la pluralité de canaux d'acquisition différents de la station de base (600) ; et
utiliser (S308), par la station de base (600) en réponse à la réception du signal, une technique d'accentuation de la couverture de liaison descendante par rapport à au moins l'un de la pluralité de canaux d'acquisition différents, **caractérisé en ce que**
le signal indique quel canal de la pluralité de canaux d'acquisition différents a été détecté par l'UE (700).

2. Procédé selon la revendication 1, dans lequel le signal transmis par l'UE (700) indique l'un parmi : un premier niveau de détection dans lequel l'UE (700) a détecté un canal d'acquisition transportant des informations nécessaires à une synchronisation avec la station de base (600), et un second niveau de détection dans lequel l'UE (700) a détecté un canal d'acquisition transportant des informations nécessaires à une communication avec la station de base (600).

3. Procédé selon la revendication 2, dans lequel les informations nécessaires à une communication avec la station de base (600) comprennent un bloc d'une pluralité de blocs d'informations, et la technique d'accentuation de couverture de liaison descendante utilisée par la station de base (600) comprend la répétition d'au moins un bloc d'informations.

4. Procédé de demande de couverture par un équipement utilisateur, UE (700), le procédé comprenant les étapes consistant à :
lorsque l'UE (700) est en mode veille, déterminer qu'une partie d'une pluralité de canaux d'acquisition différents transmis par une station de base (600) ont été détectés par l'UE (700), transmettre un signal à la station de base (600) indiquant la détection par l'UE (700) d'une partie de la pluralité de canaux d'acquisition différents de la station de base (600), **caractérisé en ce que**
le signal indique quel canal de la pluralité de canaux d'acquisition différents a été détecté par l'UE (700).

5. Procédé de fourniture d'une couverture à un équipement utilisateur, UE (700), par une station de base (600) configurée pour transmettre une pluralité de canaux d'acquisition différents, le procédé comprenant les étapes consistant à :
transmettre la pluralité de canaux d'acquisition différents ;
recevoir un signal indiquant la détection par l'UE (700) d'une partie de la pluralité de canaux d'acquisition différents de liaison descendante ; et
utiliser une technique d'accentuation de couverture de liaison descendante par rapport à au moins un canal de la pluralité de canaux d'acquisition différents, **caractérisé en ce que**
le signal indique quel canal de la pluralité de canaux d'acquisition différents a été détecté par l'UE (700).

6. Equipement utilisateur, UE (700), comprenant :
un émetteur (702) ;
un récepteur (704) ; et
un processeur (706), dans lequel le processeur (706) est configuré pour :
lorsque l'UE (700) est en mode veille, déterminer qu'une partie d'une pluralité de canaux d'acquisition différents transmis par une station de base (600) ont été détectés par le récepteur (704), et le processeur (706) est configuré pour ordonner à l'émetteur (702) de transmettre à la station de base (600) un signal indiquant la détection d'une partie de la pluralité de canaux d'acquisition différents, **caractérisé en ce que**
le signal indique quel canal de la pluralité de canaux d'acquisition différents a été détecté par l'UE (700).

7. Station de base (600), comprenant
un émetteur (602) ;
un récepteur (604) ; et
un processeur (606), dans laquelle le processeur (606) est configuré pour :
ordonner à l'émetteur (602) de transmettre une pluralité de canaux d'acquisition différents, et le processeur (606) est configuré pour
traiter un signal reçu par le récepteur (604) indiquant la détection par un équipement utilisateur, UE (700), d'une partie de la pluralité de canaux d'acquisition différents, et
ordonner à l'émetteur (602) d'utiliser une technique d'accentuation de couverture de liaison descendante par rapport à au moins un canal de la pluralité de canaux d'acquisition différents, **caractérisée en ce que**
le signal indique quel canal de la pluralité de canaux d'acquisition différents a été détecté par l'UE (700).

8. Système de communication sans fil, comprenant :
un équipement utilisateur, UE (700), selon la revendication 6 ; et
une station de base (600) selon la revendication 7.

9. Support lisible par ordinateur supportant des instructions lisibles par ordinateur qui, lorsqu'elles sont exécutées par un ordinateur, amènent l'ordinateur à exécuter le procédé selon la revendication 5.
